Europäisches Patentamt

(19) European Patent Office

Office européen des brevets

(11) Numéro de publication : **0 056 470**
**B1**

(12) # FASCICULE DE BREVET EUROPÉEN

(45) Date de publication du fascicule du brevet :
07.11.84

(51) Int. Cl.³ : **G 03 G 15/09, H 02 K 21/14**

(21) Numéro de dépôt : **81110527.9**

(22) Date de dépôt : **17.12.81**

(54) **Dispositif pour la constitution d'une brosse magnétique rotative.**

(30) Priorité : **23.12.80 FR 8027346**

(43) Date de publication de la demande :
**28.07.82 Bulletin 82/30**

(45) Mention de la délivrance du brevet :
**07.11.84 Bulletin 84/45**

(84) Etats contractants désignés :
**BE DE FR GB IT LU NL SE**

(56) Documents cités :
**US-A- 3 800 175**
**US-A- 4 052 630**
**US-A- 4 074 157**

(73) Titulaire : **COMPAGNIE INDUSTRIELLE DES TELE-
COMMUNICATIONS CIT-ALCATEL S.A. dite:**
**12, rue de la Baume**
**F-75008 Paris (FR)**

(72) Inventeur : **Normand, Gérard**
**6, rue Einstein**
**F-25006 Besançon Cedex (FR)**

(74) Mandataire : **Weinmiller, Jürgen et al**
**Zeppelinstrasse 63**
**D-8000 München 80 (DE)**

Jouve, 18, rue St-Denis, 75001 Paris, France

## Description

L'invention concerne un dispositif pour la constitution d'une brosse magnétique rotative. Elle s'applique en particulier au développement d'image latente électrostatique dans une imprimante électrostatique ou une imprimante électrophotographique notamment d'un dispositif de reproduction de documents tels un copieur ou un télécopieur.

On sait que, dans une imprimante électrostatique ou une imprimante électrophotographique d'un dispositif de reproduction de documents, la reproduction d'un document est généralement obtenue par formation sur un support, à partir de données issues d'une analyse de ce document, d'une image latente électrostatique du document par la mise en œuvre d'un procédé d'impression électrostatique ou électrophotographique selon le type d'imprimante, développement de cette image latente à l'aide d'un agent de développement, puis soit fixation directement sur le support de l'image latente développée, soit d'abord transfert sur un autre support, généralement du papier ordinaire, de l'image latente développée puis fixation sur cet autre support de l'image latente développée et transférée.

Dans de nombreuses imprimantes de l'un ou l'autre type, le développement de l'image latente, qui est effectué par ce que l'on nomme couramment une station de développement, est obtenu en amenant à proximité du support de l'image latente à développer des particules colorées d'un agent de développement en poudre de telle manière que, sous l'action principalement des forces électrostatiques dues aux charges formant l'image latente, de telles particules soient attirées et maintenues à la surface du support aux emplacements où sont localisées ces charges et rendent ainsi visible l'image latente.

Des procédés de développement couramment utilisés et connus sous le nom de procédé « à brosse magnétique », tels que celui décrit dans le brevet américain n° 2 786 439, font appel à un agent de développement pulvérulent à particules magnétiques. L'agent de développement peut être de type bi-composant, il est constitué alors de fines particules colorées non magnétiques et de particules plus grosses, magnétiques, généralement des particules de fer ; cet agent peut être de type mono-composant, il est constitué alors de particules colorées contenant un matériau magnétique tel par exemple que la magnétite.

Selon un procédé connu, décrit notamment dans le brevet américain n° 4 155 328, sous l'action de forces motrices d'origine magnétique, on donne à de la poudre d'agent de développement prélevée par exemple d'un réservoir une configuration particulière rappelant celle d'une brosse rotative ; on fait défiler le support de l'image latente à développer contre la brosse ainsi formée qui s'étend sur toute la dimension de la surface du support selon la direction perpendiculaire à celle du défilement, de manière que la surface du support soit balayée par la brosse qui laisse alors aux emplacements où sont localisées les charges des particules colorées d'agent de développement, cette brosse formée magnétiquement ou brosse magnétique étant constamment régénérée pour compenser la perte de ces particules.

Selon ce brevet américain n° 4 155 328, la station de développement mettant en œuvre ce procédé et faisant appel à un agent de développement de type mono-composant utilise, pour la constitution de la brosse magnétique, un dispositif comportant un barreau plein à axe de symétrie longitudinal monté pour tourner autour de cet axe et portant sur sa périphérie des aimants permanents, un tube cylindrique en aluminium entourant le barreau équipé des aimants et monté fixe dans la station, un moteur d'entraînement en rotation et un dispositif d'accouplement entre le moteur et le barreau. Les aimants s'étendent chacun parallèlement à l'axe sur toute la longueur du barreau exception faite des extrémités de ce barreau, plus fines que le restant du barreau, qui sont montées sur deux paliers et dont l'une est raccordée au moteur par le dispositif d'accouplement ; ces aimants sont disposés régulièrement sur la périphérie du barreau et de façon à présenter chacun vers le tube un pôle de nature différente de celle des pôles présentés par les deux aimants voisins.

Le tube reçoit d'un réservoir, sur toute la longueur des aimants du barreau, de la poudre d'agent de développement qui, sous l'action de ces aimants qui tournent solidaires du barreau, forme autour du tube une couche de particules qui tourne en sens inverse de celui où tourne ce barreau et constitue ladite brosse dont la longueur est sensiblement la même que celle des aimants.

La présente invention a pour but de permettre la réalisation d'un dispositif pour la constitution d'une telle brosse, de structure plus compacte et plus légère et de coût plus faible.

L'invention a pour objet un dispositif pour la constitution d'une brosse magnétique rotative, comportant une pièce de forme générale cylindrique à axe de symétrie longitudinal, montée pour tourner autour de cet axe et présentant à sa périphérie des pôles magnétiques permanents s'étendant parallèlement à l'axe et étant régulièrement répartis et alternés nord et sud à la périphérie de la pièce en section droite, un tube en matériau non magnétique, entourant ladite pièce sans contact avec elle et destiné à recevoir sur une longueur donnée une poudre à particules magnétiques, et un moyen d'entraînement en rotation de ladite pièce en vue de la formation avec ladite poudre, sous l'action desdits pôles permanents, d'une couche de particules tournant autour dudit tube et constituant alors ladite brosse ayant sensiblement ladite longueur donnée, caractérisé en ce que ladite pièce, de longueur supérieure à ladite longueur donnée, a une portion longitudinale, destinée à être extérieure à ladite brosse et sur laquelle s'étendent également lesdits pôles permanents, logée à l'intérieur d'un canal cylindrique délimité par des pôles d'une armature électromagnétique agencée de manière à assurer l'entraînement en rotation de ladite pièce par coopération de ses pôles avec ceux de cette pièce au niveau de ladite portion longitudinale et constituant ainsi ledit moyen d'entraînement.

De préférence ladite pièce est creuse.

De préférence également ledit tube entoure ladite pièce sur toute sa longueur et est alors intercalé entre les pôles de cette pièce et ceux de l'armature au niveau de ladite portion longitudinale de la pièce, logée à l'intérieur dudit canal.

L'armature est de préférence annulaire.

Les caractéristiques et avantages de l'invention apparaîtront plus clairement dans la description faite ci-après en regard des dessins ci-annexés. Dans ces dessins :

dans la figure 1 on a représenté de façon schématique une station de développement d'image latente électrostatique, de type à brosse magnétique, associée à un support d'image,

dans la figure 2 on a représenté, vu en coupe longitudinale, un dispositif selon l'invention utilisé dans la station de développement précédente,

dans la figure 3 on a représenté une vue en coupe partielle selon la ligne brisée III-III de la figure 2 du dispositif selon l'invention,

dans la figure 4 on a représenté une vue en perspective coupée d'un autre élément du dispositif selon l'invention illustré dans la figure 2.

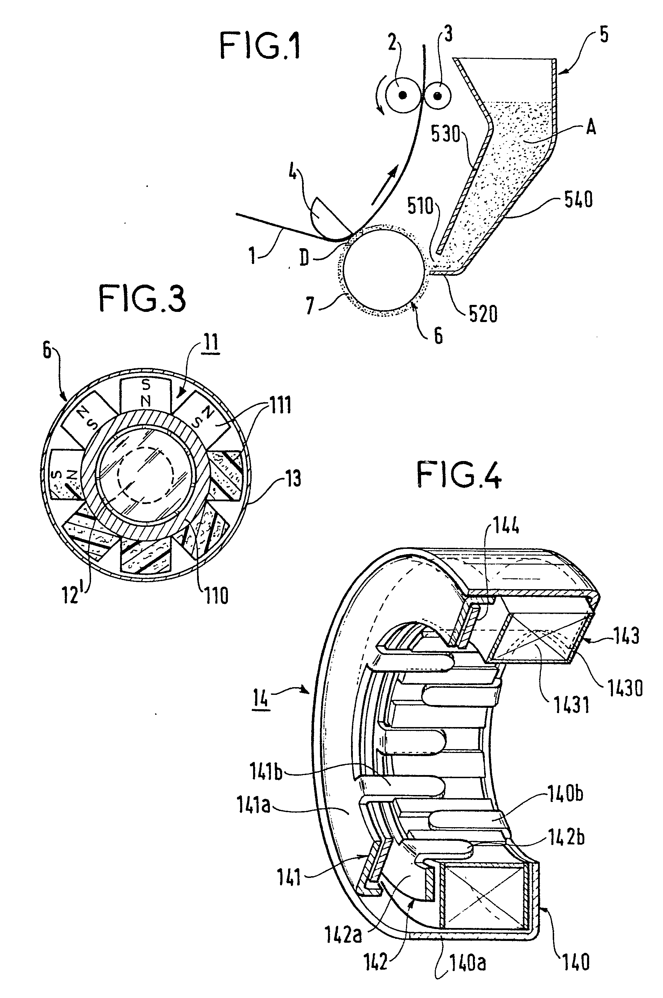

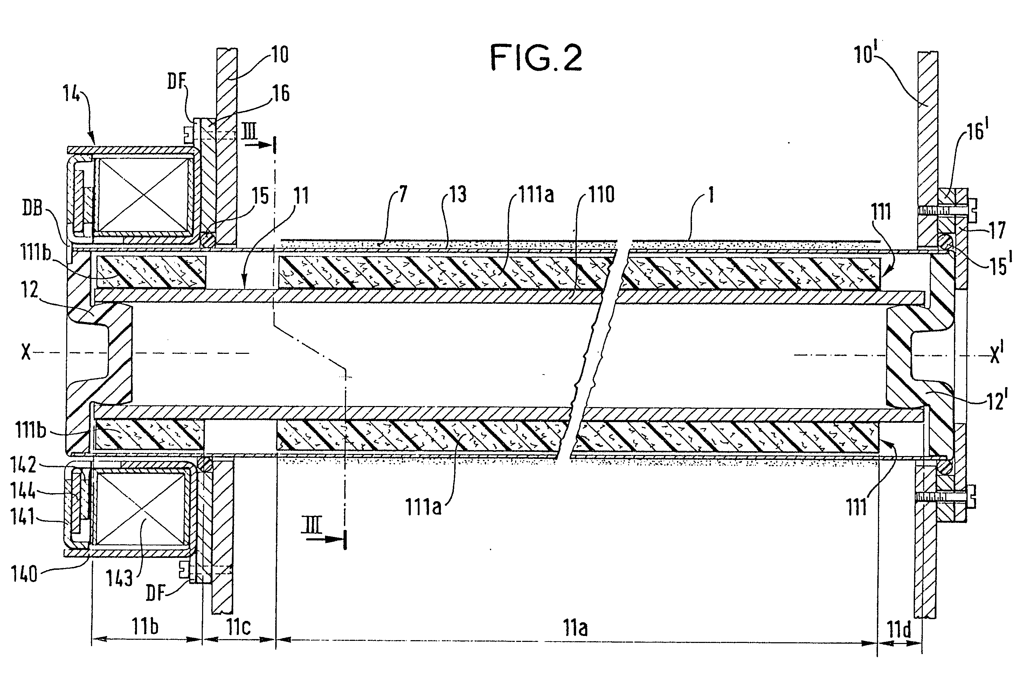

La station de développement illustrée dans la figure 1 assure le développement d'une image latente électrostatique portée par un support 1 tel un ruban de papier diélectrique c'est-à-dire de papier à substrat électriquement conducteur recouvert d'une mince couche diélectrique. Ce ruban de papier 1 (non détaillé) défile adjacent, par sa couche diélectrique à la surface de laquelle est formée l'image latente à développer, à une zone dite de développement D s'étendant en longueur sur toute la largeur du ruban et dans laquelle s'effectue le développement de l'image latente, sous l'action d'un rouleau d'entraînement, par exemple pas à pas, 2, associé à un rouleau suiveur 3, le ruban de papier, engagé entre les deux rouleaux 2 et 3 disposés en aval de la zone de développement dans le sens du défilement, étant maintenu adjacent à la zone de développement D par un organe 4 en forme par exemple de demi-cylindre de révolution et monté alors fixe. Bien entendu, entre la zone de développement D et la paire de rouleaux 2 et 3, le ruban de papier 1 traverse une centrale de fixation d'image développée, non représentée ni décrite ici car sans rapport direct avec l'invention.

On notera que les éléments apparaissant dans la figure 1 sont schématisés vus en coupe selon un plan vertical perpendiculaire aux axes (qui sont donc horizontaux) de rotation des rouleaux 2 et 3.

La station de développement comporte un réservoir 5 d'un agent de développement en poudre à particules magnétiques et de type mono-composant, référencé A. Le réservoir 5, en matériau non magnétique, est de longueur très légèrement supérieure à la largeur du ruban de papier ; il est à remplissage par le haut et comporte à sa partie inférieure une fente 510 pour le passage de la poudre d'agent de développement A. La fente 510 est de longueur sensiblement égale à la largeur du ruban de papier et s'étend parallèlement aux axes de rotation des rouleaux 2 et 3 dans le sens de sa longueur. Ainsi qu'illustré, le réservoir 5 est par exemple à fond plat, référencé 520, et la fente 510 est aménagée entre le fond 520 du réservoir et une paroi longitudinale de ce réservoir, référencée 530, le fond 520 et la paroi 530 n'étant donc pas jointifs. L'autre paroi longitudinale du réservoir, qui peut être éventuellement d'un seul tenant avec le fond 520, a été référencée 540.

Par la fente 510, le réservoir 5 alimente en poudre d'agent de développement A un dispositif 6 de formation d'une brosse magnétique rotative 7, que comporte également la station de développement. Ce dispositif 6 reçoit de la poudre du réservoir 5 et procède par entraînement de la poudre en rotation autour d'une surface cylindrique à directrice circulaire et à génératrice parallèle aux axes de rotation des rouleaux 2 et 3 sous l'action de forces motrices d'origine magnétique qu'il engendre, de manière à former une sorte de manchon rotatif de longueur sensiblement égale à la longueur de la fente 510 c'est-à-dire à la largeur du ruban de papier et constituant ladite brosse 7. La brosse 7 traverse la zone de développement D en balayant la surface de la couche diélectrique du ruban de papier 1 qui passe adjacent à cette zone qui se trouve ainsi définie.

Au cours de ce balayage, la brosse laisse aux emplacements où sont localisées les charges électriques formant l'image latente des particules d'agent de développement A qui rendent alors visible cette image, ces particules, ayant acquis une charge de polarité opposée à celle des charges formant l'image par exemple sous l'effet d'une certaine turbulence dans la brosse, étant attirées et maintenues auxdits emplacements sous l'action de forces principalement d'origine électrostatique prépondérantes alors par rapport aux forces d'origine magnétique engendrées par le dispositif 6. La quantité d'agent de développement perdue par la brosse 7 dans la zone de développement D est compensée par celle que lui fournit le réservoir 5, des moyens mécaniques de réglage (non illustrés) pouvant en outre être prévus pour assurer une compensation sensiblement exacte de cette quantité d'agent de développement perdue par la brosse, qui est fonction de la densité de charge de l'image traitée, et permettre une meilleure qualité de développement.

Le dispositif 6 n'est pas détaillé dans la figure 1. Il y est simplement symbolisé comme un cylindre de révolution dont la surface latérale représente la surface cylindrique de révolution mentionnée ci-avant, autour de laquelle est formée et tourne la brosse 7.

Ce dispositif 6, réalisé selon l'invention, est illustré dans les figures 2 à 4. Dans la figure 2, il est montré, vu en coupe longitudinale, installé dans la station de développement précédente dont on a représenté des flasques latéraux, référencés 10 et 10', entre lesquels est disposé le réservoir 5 schématisé dans la figure 1, mais non représenté dans la figure 2 ; la brosse magnétique 7 dont ce dispositif assure la constitution et le ruban de papier 1 balayé par la brosse dans la zone de développement D que le plan de coupe traverse, ont également été représentés dans cette figure 2. Les figures 3 et 4 concernent plus particulièrement deux parties respectivement de ce dispositif. La description de celui-ci est faite ci-après en regard des figures 2 à 4.

Ce dispositif comporte une pièce 11, de forme générale cylindrique, à axe de symétrie longitudinale XX', présentant à sa périphérie des pôles magnétiques permanents, au nombre de huit dans l'exemple illustré, s'étendant parallèlement à l'axe XX' et étant régulièrement répartis et alternés nord et sud à la périphérie de la pièce en section droite. Cette pièce 11, de longueur supérieure à la largeur du ruban de papier 1, est constituée d'un barreau cylindrique creux en acier 110, de section droite circulaire et d'axe central XX', et de bandes en élastomère magnétique 111, ici au nombre de huit, collées sur la surface extérieure du barreau creux 110. Les bandes 111, qui s'étendent parallèlement à l'axe XX', sont disposées régulièrement sur la périphérie du barreau 110 et de façon à présenter chacune vers l'extérieur un pôle magnétique de nature (nord ou sud) différente de celle des pôles présentés par les deux bandes voisines, ces pôles présentés vers l'extérieur par les bandes 111 constituant les pôles de la pièce 11 mentionnés précédemment.

Les bandes 111 sont avantageusement discontinues au niveau d'une première portion annulaire du barreau 110 (cette discontinuité étant par exemple obtenue par simple décolletage) de façon à être chacune en deux portions dont l'une référencée 111a, de longueur sensiblement égale à la largeur du ruban de papier 1, s'étend depuis l'une des extrémités de cette première portion annulaire jusqu'à faible distance de l'une des extrémités du barreau qui se termine ainsi par une seconde portion annulaire non recouverte par les bandes, tandis que l'autre, référencé 111b, de longueur ici beaucoup plus courte, s'étend depuis l'autre extrémité de ladite première portion annulaire jusqu'à sensiblement l'autre extrémité du barreau. Pour cette pièce 11, on a référencé 11a et 11b les portions longitudinales sur lesquelles s'étendent les portions 111a et 111b des bandes 111 respectivement, et 11c et 11d les portions longitudinales, annulaires, sur lesquelles les bandes 111 sont interrompues, la portion 11d étant terminale.

Si l'on excepte les deux portions annulaires 11c et 11d, la pièce 11 a bien partout même section droite.

La pièce creuse 11 est montée sur deux paliers de type mâle 12 et 12' par exemple en polyamide, de façon à pouvoir tourner autour de l'axe XX'. Le palier 12 est situé du côté de la portion 11b et le palier 12' du côté de la portion 11d.

Un tube cylindrique 13 de section droite circulaire, entoure la pièce 11 sans contact avec elle et en lui étant coaxial. Ce tube, en matériau non magnétique, par exemple en aluminium, est de diamètre intérieur peu supérieur au diamètre extérieur du barreau creux 110 augmenté de l'épaisseur des bandes 111 et sa paroi est très mince. Il recouvre la pièce 11 sur toute la longueur de celle-ci et est fixé par exemple par collage aux paliers 12 et 12' qui servent également de flasques pour le dispositif.

La pièce 11, entourée du tube 13 de longueur légèrement supérieure, s'étend, dans le sens X'X, depuis le flasque latéral, 10', de la station de développement du côté duquel est située la portion annulaire 11d et que traverse le tube 13 par une ouverture prévue à cet effet, jusqu'au-delà de l'autre flasque latéral, 10, de la section de développement que traversent, par une ouverture prévue à cet effet, le tube 13 ainsi que cette pièce 11 au niveau de la portion 11c de celle-ci, la portion 11a de la pièce 11 s'étendant ainsi entre les deux flasques 10 et 10', et la portion 11b de cette pièce au-delà du flasque 10.

La brosse magnétique 7, composée de poudre d'agent de développement fournie par le réservoir 5 (figure 1), est formée, ainsi qu'il sera précisé ci-après, autour du tube 13 le long de la portion 11a de la pièce 11.

Une armature électromagnétique 14, de forme annulaire, est montée autour de la pièce 11 entourée du tube cylindrique 13 au niveau de la portion 116 de cette pièce qui d'après ce qui précède déborde donc de la brosse 7 constituée. Cette armature 14 est reliée à une source d'alimentation électrique à courant alternatif non illustrée, elle a pour rôle d'entraîner en rotation autour de l'axe XX' la pièce 11.

L'armature 14, de type « monophasé », comporte un circuit magnétique en trois éléments référencés 140, 141 et 142 et désignés ci-après par culasse, contre-culasse et contre-culasse auxiliaire respectivement, une bobine d'excitation 143 et une bague de déphasage 144.

Pour la description plus détaillée de l'armature 14, donnée ci-après, on se réfère plus particulièrement à la figure 4.

La culasse 140 et la contre-culasse 141 sont formées essentiellement par deux parties de révolution 140a et 141a respectivement, chacune présentant une portion cylindrique et une portion plate en forme de couronne, c'est-à-dire étant en coupe axiale sensiblement en L à angle légèrement arrondi, et par des languettes plates 140b et 141b qui forment ainsi qu'il apparaîtra ci-après un premier et un second ensemble de pôles de l'armature et sont de ce fait qualifiées de polaires. Les parties 140a et 141a sont montées l'une par rapport à l'autre pour former un ensemble de révolution de forme annulaire présentant en coupe axiale sensiblement la forme d'un U ouvert vers l'intérieur de cet ensemble, la base du L de coupe de la contre-culasse venant ici doubler intérieurement une portion terminale du corps du L de coupe de la culasse. Les languettes polaires 140b et 141b sont reliées par de courtes attaches non référencées aux parties 140a et 141a respectivement c'est-à-dire alternativement sur les bords intérieurs de l'ensemble de révolution formé par ces parties, elles sont repliées sensiblement à 90° sur les branches du U de coupe de cet ensemble et le ferme partiellement. Ces languettes polaires de chaque ensemble s'étendent ainsi régulièrement réparties autour d'une surface cylindrique de révolution, non matérialisée, de section droite de diamètre d inférieur au diamètre intérieur de la section droite de l'ensemble de révolution mais très légèrement supérieur au diamètre extérieur du tube 13. Les languettes 140b, qui sont identiques entre elles, de même que les languettes 141b qui sont également identiques entre elles, sont dans l'exemple considéré au nombre de quatre, deux languettes 140b et deux languettes 141b ayant seulement été représentées dans la figure 4.

La contre-culasse auxiliaire 142 se compose essentiellement d'une partie plate en forme de couronne 142a et de languettes plates identiques entre elles 142b, qui, ainsi qu'il apparaîtra ci-après forment un troisième ensemble de pôles de l'armature et seront donc également qualifiées de polaires. Cette partie plate 142a est disposée sous la portion en couronne de la partie 141a de la contre-culasse et est séparée d'elle par la bague de déphasage 144, la partie 142a étant sensiblement plus étroite que la portion en couronne de la partie 141a mais sensiblement de même diamètre intérieur qu'elle. Les languettes polaires 142b sont reliées au bord circulaire intérieur de la partie en couronne 142a chacune par une courte attache non référencée, identique d'une languette polaire 142b à l'autre, permettant de réaliser un changement de direction à 90° entre la languette concernée et la partie plate 142a qui est donc perpendiculaire aux languettes polaires 142b. Celles-ci sont également régulièrement réparties autour de la surface cylindrique de révolution, non matérialisée et de diamètre d, qui leur est inscrite. Elles sont également au nombre de quatre, deux seulement ayant été représentées dans la figure 4.

La culasse 140, la contre-culasse 141 et la contre-culasse auxiliaire 142 qui sont par exemple en acier doux sont ici chacune d'épaisseur constante et ont toutes trois même épaisseur.

La bague de déphasage 144, en matériau électriquement conducteur et non magnétique tel par exemple d'aluminium ou le cuivre, a la forme d'une couronne de diamètre intérieur légèrement supérieur au diamètre d augmenté de l'épaisseur des languettes polaires, et de diamètre extérieur légèrement inférieur au diamètre intérieur de la portion cylindrique de la partie 141a de la contre-culasse.

La bobine d'excitation 143 est constituée d'une carcasse isolante 1430 ayant sensiblement la forme d'un anneau creux, de section rectangulaire, intérieur à l'ensemble de révolution formé par les parties 140a et 141a de la culasse et de la contre-culasse respectivement, et d'un enroulement 1431 logé à l'intérieur de cet anneau creux. La carcasse annulaire 1430 porte extérieurement sur sa paroi cylindrique intérieure des nervures axiales entre lesquelles sont insérées les languettes polaires 140b, 141b et 142b respectivement dont les largeurs cumulées n'excèdent pas πd.

Les différents éléments de l'armature 14 sont donc montés de telle façon que la bobine 143 est emprisonnée dans une sorte de cage annulaire délimitée par les portions en couronne des parties 140a et 141a de la culasse et de la contre-culasse respectivement, par la portion cylindrique de la partie 140a de la culasse et enfin par une paroi latérale intérieure, à claire-voie, formée par les languettes polaires 140b, 141b et 142b. La portion cylindrique de la partie 141a de la contre-culasse, la partie plate 142a en couronne de la contre-culasse auxiliaire et la bague de déphasage 144 en contact avec la partie 142a sont ainsi logées à l'intérieur de cette cage annulaire.

Bien entendu la carcasse 1430 et par exemple la partie 140a de la culasse sont munies d'orifices (non représentés) pour le passage de fils d'alimentation de l'enroulement reliés à la source à courant alternatif précitée.

Dans cet assemblage, les languettes de la culasse, de la contre-culasse et de la contre-culasse auxiliaire, qui sont intercalées les unes entre les autres, délimitent un canal cylindrique à section droite circulaire de diamètre d et d'axe central coïncidant avec celui de la bobine 143 et celui de la bague de déphasage 144, l'espacement latéral entre languettes, correspondant aux nervures de la bobine, étant constant et faible. On notera que ces nervures servent non seulement au positionnement relatif correct des éléments du circuit magnétique de l'armature 14 mais également au maintien de ces divers éléments qui sont assemblés à force.

Les languettes polaires 140b et 141b recouvrent par exemple la bobine approximativement sur les 2/3 de sa hauteur tandis que les languettes polaires 142b ne la recouvrent approximativement que sur la moitié de sa hauteur.

Pour la commodité de la représentation, ces languettes sont illustrées dans la figure 4 de même largeur. Avantageusement, en pratique les languettes 142b sont plus étroites que les languettes 141b elles-mêmes plus étroites que les languettes 140b. Ainsi les languettes polaires 140b auront des faces de surface approximativement égale à celle des faces des languettes polaires 141b augmentée de celle des faces des languettes polaires 142b ; ces languettes 140b forment un premier ensemble de pôles dits principaux de l'armature 14 tandis que les languettes polaires 141b et 142b, s'étendant axialement en sens inverse de celui où s'étendent les languettes polaires 140b, forment respectivement un second ensemble de pôles dits principaux et un ensemble de pôles dits auxiliaires associés aux pôles principaux du second ensemble, l'armature étant alimentée, les flux magnétiques dans les pôles principaux du second ensemble et dans les pôles auxiliaires respectivement étant légèrement déphasés l'un par rapport à l'autre en raison de la présence de la bague de déphasage 144, tandis que les déphasages entre le flux magnétique dans les pôles principaux du premier ensemble et les flux magnétiques dans les pôles des deux autres ensembles respectivement sont voisins de 180°.

Ainsi qu'indiqué ci-avant, l'armature 14 est montée autour de la pièce 11 au niveau de la portion 11b ; celle-ci est logée sensiblement dans le canal délimité par les languettes et dont l'axe central coïncide avec l'axe XX', le tube cylindrique 13, en matériau non magnétique, étant, au niveau de ce canal, intercalé entre les pôles de l'armature 14 et les pôles de la pièce 11.

La culasse 140 de l'armature 14 est appliquée contre un joint torique 15 mis à friction sur le tube cylindrique 13 et appliqué lui-même contre le flasque 10 à l'extérieur de la zone délimitée par les flasques 10 et 10', et une entretoise 16 enserrant ce joint. Cette culasse est munie, pour la fixation de l'armature 14 sur le flasque 10, de doigts de fixation DF (illustrés uniquement dans la figure 2 où deux doigts DF sont visibles) s'étendant radialement vers l'extérieur depuis la portion plate en couronne de la partie 140a, la fixation de l'armature étant effectuée par vissage de chaque doigt DF, au moyen d'une vis, sur une flasque 10 à travers l'entretoise 16. A cet agencement qui assure également en partie le maintien du tube cylindrique 13 et donc des paliers 12 et 12' et de la pièce 11, est associé pour ce maintien, au niveau du flasque 10', un agencement faisant intervenir un joint torique 15' mis à friction sur le tube cylindrique 13 et appliqué contre le flasque 10' à l'extérieur de la zone délimitée par les flasques 10 et 10', une entretoise 16' enserrant ce joint 15' et une rondelle 17 appliquée contre l'entretoise 16' et le palier 12' qu'elle recouvre partiellement, cette rondelle 17 étant vissée, au moyen de vis sur le flasque 10' à travers l'entretoise 16'. De plus, toujours dans le même but, la contre-culasse 141 de l'armature 14 est équipée de doigts de blocage DB (illustrés uniquement dans la figure 2 où en fait un seul doigt DB est visible) s'étendant radialement vers l'axe XX' depuis la portion plate de la partie 141a pour se loger dans des encoches prévues à cet effet dans le palier 12 qui est ainsi bloqué axialement dans le sens X'X (le palier 12' étant lui bloqué axialement dans le sens XX' par la rondelle 17).

En fonctionnement, l'armature 14, alimentée en courant alternatif, entraîne en rotation la pièce 11, par coopération de ses pôles avec ceux de la pièce 11, le long de la portion 11b, la bague de déphasage 144, en créant un léger déphasage entre le flux magnétique dans les pôles principaux du second ensemble de pôles principaux de l'armature 14 et le flux magnétique dans les pôles auxiliaires de cette armature, permettant un auto-démarrage du dispositif qui démarre en asynchrone pour fonctionner ensuite au synchronisme, la pièce 11 tournant alors autour de l'axe XX' à la vitesse f/4 dans l'exemple considéré, f étant la fréquence du courant alternatif d'alimentation de l'armature. On notera que le sens de rotation de la pièce 11 est déterminée par l'ordre de succession des pôles principaux du premier ensemble.

Le tube 13, qui est disposé le long de la fente 510 du réservoir 5 (figure 1) au niveau de la portion 11a de la pièce 11 et à très faible distance de cette fente, reçoit sur sa surface extérieure, au niveau de cette portion 11a, de la poudre d'agent de développement qui, sous l'action des pôles magnétiques permanents de la pièce 11 tournant à l'intérieur du tube autour de l'axe XX' grâce à l'armature 14, forme à la surface du tube, le long de la portion 11a, une couche ou manchon de particules tournant en sens inverse de celui où tourne la pièce 11 et constituant la brosse magnétique rotative 7 qui balaye le ruban de papier 1 défilant à très faible distance du tube 13. On notera que la surface extérieure du tube 13 correspond, au niveau de la portion 11a de la pièce 11, à la surface cylindrique de révolution mentionnée ci-avant en regard de la figure 1.

On notera en outre que les joints toriques 15 et 15' sont prévus non seulement dans un but de tenue mécanique du tube 13, mais également dans un but d'étanchéité pour éliminer tout risque de fuite de poudre d'agent de développement à l'extérieur de la zone délimitée par les flasques 10 et 10', ces risques étant déjà limités dans l'exemple considéré par l'interruption des pôles de la pièce 11 de chaque côté de la portion 11a de cette pièce s'étendant le long de la fente du réservoir de poudre d'agent de développement.

On a décrit un exemple particulier de réalisation de l'invention, mais il est bien évident que l'on peut y apporter des modifications et/ou remplacer certains moyens par d'autres techniquement équivalents. Notamment et bien qu'en pratique cela soit moins avantageux, les pôles permanents de la pièce logée à l'intérieur du tube cylindrique pourraient s'étendre sans discontinuité sur toute la longueur de cette pièce ; le tube cylindrique pourrait n'entourer la pièce à pôles permanents que dans la zone du dispositif où la brosse magnétique est destinée à être formée. De plus l'armature électromagnétique pourrait être différente de celle décrite, par exemple de type à circuit magnétique à empilement de tôles et cornes polaires ; elle sera de toutes manières agencée de façon à assurer l'entraînement en rotation de la pièce à pôles permanents par coopération de ses pôles, délimitant un canal cylindrique, avec ceux de ladite pièce sur une portion longitudinale de celle-ci destinée à déborder de la brosse magnétique et logée à l'intérieur de ce canal.

## Revendications

1. Dispositif pour la constitution d'une brosse magnétique rotative, comportant une pièce (11) de forme générale cylindrique à axe de symétrie longitudinal (XX'), montée pour tourner autour de cet axe et présentant à sa périphérie des pôles magnétiques permanents (111) s'étendant parallèlement à l'axe et étant régulièrement répartis et alternés nord et sud à la périphérie de la pièce en section droite, un tube (13) en matériau non magnétique, entourant ladite pièce sans contact avec elle et destiné à recevoir sur une longueur donnée une poudre à particules magnétiques, et un moyen d'entraînement en rotation de ladite pièce en vue de la formation avec ladite poudre, sous l'action desdits pôles permanents, d'une couche de particules tournant autour dudit tube et constituant alors ladite brosse (7) ayant sensiblement ladite longueur donnée, caractérisé en ce que ladite pièce (11), de longueur supérieure à ladite longueur donnée, a une portion longitudinale (11b), destinée à être extérieure à ladite brosse (7) et sur laquelle s'étendent également lesdits pôles permanents (111), logée à l'intérieur d'un canal cylindrique délimité par des pôles d'une armature électromagnétique (14) agencée de manière à assurer l'entraînement en rotation de ladite pièce par coopération de ses pôles avec ceux de cette pièce au niveau de ladite portion longitudinale (11b) et constituant ainsi ledit moyen d'entraînement.

2. Dispositif selon la revendication 1, caractérisé par le fait que ladite pièce (11) est creuse.

3. Dispositif selon l'une des revendications 1 et 2, caractérisé par le fait que ledit tube (13) entoure ladite pièce (11) sur toute sa longueur et est alors intercalé entre les pôles de cette pièce et ceux de l'armature au niveau de ladite portion longitudinale de la pièce, logée à l'intérieur dudit canal.

4. Dispositif selon l'une des revendications 1 à 3, caractérisé par le fait que l'armature (14) est de forme annulaire.

5. Dispositif selon la revendication 4, caractérisé par le fait que ladite armature comporte une bobine d'excitation (143), un circuit magnétique en trois éléments (140, 141, 142) montés pour former une cage annulaire dans laquelle la bobine est emprisonnée, et une bague de déphasage (144) également logée dans la cage, les pôles électromagnétiques étant constitués par des languettes (140b, 141b, 142b) formant la paroi cylindrique intérieure à claire-voie de la cage qui délimite ledit canal cylindrique et appartenant aux trois éléments du circuit magnétique pour former deux ensembles de pôles principaux (140b, 141b) et un ensemble de pôles auxiliaires (142b) respectivement.

## Claims

1. A device for constituting a rotary magnetic brush, comprising a member (11) of a generally cylindrical form with a longitudinal axis of symmetry (XX'), mounted so as to rotate around this axis and presenting at its periphery permanent magnetic poles (111) which extend parallelly to the axis and are regularly spaced out and alternating north and south poles on the periphery of the member, a tube (13) made of non-magnetic material surrounding said member without touching it and conceived to receive over a given length a powder with magnetic particles, and a drive means for making said member rotate in order to form with said powder, under the influence of said permanent poles, a layer of particles turning around said tube and thus constituting said brush (7) which has essentially said given length, characterized in that said member (11), of greater length than said given length, has a longitudinal portion (11b) which is destined to extend beyond said brush (7) and on which extend also said permanent poles (111), said portion being located inside of a cylindrical channel which is delimited by the poles of an electromagnetic armature (14), the latter being arranged so as to cause the rotation of said member by cooperation of its poles with those of said member by cooperation of its poles with those of said member in the region of said longitudinal portion (11b), this armature thus constituting said drive means.

2. A device according to claim 1, characterized in that said member (11) is hollow.

3. A device according to one of the claims 1 and 2, characterized in that said tube (13) surrounds said member (11) over its entire length and is thus interposed between the poles of this member and those of the armature in the region of said longitudinal portion of the member which is situated within said channel.

4. A device according to one of the claims 1 to 3, characterized in that the armature (14) is of annular form.

5. A device according to claim 4, characterized in that said armature comprises an excitation winding (143), a magnetic circuit composed of three elements (140, 141, 142) assembled to form an annular cage in which the winding is emprisonned, and a phase shifting ring (144) equally located in the cage, the electromagnetic poles being constituted by tabs (140b, 141b, 142b) forming the inner cylindrical openwork wall of the cage which delimits said cylindrical channel and belongs to the three elements of the magnetic circuit to form two sets of principal poles (140b, 141b) and a set of auxiliary poles (142b), respectively.

## Ansprüche

1. Vorrichtung zur Bildung einer drehbaren Magnetbürste, mit einem Teil (11) allgemein zylindrischer Form mit Symmetrieachse (XX'), in Längsrichtung, das so angeordnet ist, daß es sich um diese Achse dreht und an seinem Umfang Permanentmagnetpole (111) aufweist, die sich parallel zur Achse erstrecken und regelmäßig und abwechselnd polarisiert über den Umfang mit geradem Querschnitt verteilt sind, mit einem Rohr (13) aus nicht-magnetischem Material, das dieses Teil umgibt, ohne es zu berühren, und auf einer vorbestimmten Länge ein Pulver mit Magnetpartikeln empfangen soll, und mit einem Antriebsmittel, das das Teil in Drehbewegung versetzt, um mit dem Pulver unter Einwirkung der Permanentmagnetpole eine Schicht von Partikeln zu bilden, die sich um das Rohr dreht und die Bürste (7) bildet, die im wesentlichen die vorbestimmte Länge hat, dadurch gekennzeichnet, daß das Teil (11), dessen Länge größer als die vorbestimmte Länge ist, einen Längsabschnitt (11b) hat, der außerhalb der Bürste (7) liegt und bis in den sich auch die Permanentmagnetpole (111) erstrecken, der innerhalb eines zylindrischen Kanals angeordnet ist, welcher von den Polen einer elektromagnetischen Armatur (14) begrenzt wird, wobei diese Armatur so aufgebaut ist, daß sie den Drehantrieb des Teils durch Zusammenwirken ihrer Pole mit denen des Teils in Höhe des genannten Längsabschnitts (11b) bewirkt und so das Antriebsmittel bildet.

2. Vorrichtung nach Anspruch 1, dadurch gekennzeichnet, daß das Teil (11) hohl ist.

3. Vorrichtung nach einem der Ansprüche 1 und 2, dadurch gekennzeichnet, daß das Rohr (13) das Teil (11) auf seiner ganzen Länge umgibt und somit zwischen die Pole dieses Teils und die der Armatur in Höhe des genannten Längsabschnitts des Teils, der sich im Inneren des Kanals befindet, eingeschoben ist.

4. Vorrichtung nach einem der Ansprüche 1 bis 3, dadurch gekennzeichnet, daß die Armatur (14) Ringform aufweist.

5. Vorrichtung nach Anspruch 4, dadurch gekennzeichnet, daß die Armatur eine Erregungswicklung (143), einen Magnetkreis aus drei Elementen (140, 141, 142), die so angeordnet sind, daß sie einen ringförmigen Käfig bilden, in dem die Wicklung eingeschlossen ist, und einen ebenfalls in diesem Käfig befindlichen Phasenverschiebungsring (144) aufweist, wobei die elektromagnetischen Pole aus Zungen (140b, 141b, 142b) bestehen, die die den zylindrischen Kanal begrenzende innere zylindrische Wand des Käfigs bilden und zu den drei Elementen des Magnetkreises gehören, um zwei Sätze von Hauptpolen (140b, 141b) und einen Satz von Hilfspolen (142b) zu bilden.

# FIG.1

# FIG.3

# FIG.4

# FIG.2

0 056 470